# EUROPÄISCHE PATENTSCHRIFT

(11) **EP 0 858 149 B1**
(45) Veröffentlichungstag und Bekanntmachung des Hinweises auf die Patenterteilung: **11.07.2001**
(21) Anmeldenummer: 97122604.8
(22) Anmeldetag: 20.12.1997
(51) Int. Cl.: H02K 21/12, H02K 7/14

(54) **Einzelradantrieb für Fahrzeuge**
Wheel drive for a vehicle
Entraînement d'une roue d'un véhicule

(30) Priorität: 06.02.1997 DE 19704392
(43) Veröffentlichungstag der Anmeldung: 12.08.1998
(73) Patentinhaber: Voith Turbo GmbH & Co. KG, 89522 Heidenheim (DE)
(72) Erfinder: Mühlberger, Uwe, 89522 Heidenheim (DE); Lange, Andreas, 89551 Zang (DE); Müller, Robert, Dr., 89407 Dillingen (DE)
(74) Vertreter: Dr. Weitzel & Partner

(56) Entgegenhaltungen:
- EP-A- 0 413 337
- DE-C- 19 522 382
- US-A- 3 892 300
- US-A- 5 289 072

## Beschreibung

Die Erfindung betrifft einen Einzelradantrieb, insbesondere eine Niederflurachse für Fahrzeuge.

Für die Gestaltung von Antriebseinheiten in Stadtbussen sind eine Reihe von Konzepten bekannt. Neben der konventionell als Antriebsquelle eingesetzten Verbrennungskraftmaschine finden zunehmend Konzepte mit einer Kombination aus Dieselmotor und Elektromotor Beachtung. Eine derartige Ausführung eines Einzelradtantriebes ist beispielsweise aus dem Voith-Druck G 1407 bekannt. Jedem Antriebsrad ist dabei eine Transversalflußmaschine zum Zwecke des Antriebes zugeordnet, welche jeweils beispielsweise von einer Wechselrichtereinheit mit elektrischer Leistung versorgt wird. Desweiteren ist eine als Generator betreibbare elektrische Maschine vorgesehen, welche ebenfalls vorzugsweise als Transversalflußmaschine ausgeführt sein kann, und die mechanisch mit einer Verbrennungskraftmaschine, insbesondere einem Dieselmotor, koppelbar ist. Zur Erzeugung der elektrischen Leistung wird die als Generator betreibbare elektrische Maschine vorzugsweise über einen Vierquadrantenwechselrichter angesteuert. Die Energieversorgung der als Radmotoren fungierenden Elektromotoren erfolgt in dieser dieselelektrischen Ausführung über den Dieselmotor-Generatorsatz.

Ein Direktantrieb für Stadtbusse in Form eines Einzelradantriebes wird vorteilhafterweise durch einen radnahen Einbau der als Radmotoren fungierenden Elektromotoren verwirklicht. Beispielsweise werden dazu die Elektromotoren in eine Niederflur-Starrachse montiert. Diese elektrische Niederflurachse ersetzt die ansonsten standardmäßig verwendete mechanische Niederflurachse. Die Abmessungen der einzusetzenden Elektromotoren sind jedoch beim Einbau in die Achse durch die Betätigungselemente der Bremseinrichtung, insbesondere der Scheibenbremse beschränkt. Anzustreben ist dabei ein möglichst geringer Durchmesser der Elektromotoren, wobei durch einen Achsversatz zwischen Elektromotor und Antriebsrad der zulässige Durchmesser noch vergrößert werden könnte. Insbesondere beim Einbau einer Transversalflußmaschine, deren Durchmesser-Längen-Verhältnis deutlich über 1 liegt, kann die Problematik des zur Verfügung stehenden Bauraumes nicht unberücksichtigt bleiben. Auch beim Vorsehen eines Achsversatzes zwischen der Antriebswelle des Elektromotores und der Radachse ist der maximal ausnutzbare Durchmesser für die Elektromaschine für den Einbau einer Transversalflußmaschine kaum ausreichend.

Der Erfindung liegt daher die Aufgabe zugrunde, einen Einzelradantrieb derart zu gestalten, daß die genannten Nachteile vermieden werden. Insbesondere ist der Elektromotor eines elektrischen Einzelradantriebes für Stadtbusse als Transversalflußmaschine auszuführen. Die sich daraus ergebenden konstruktiven und baulichen Schwierigkeiten sollen gelöst werden.

Die erfindungsgemäße Lösung der Aufgabe ist durch die Merkmale des Anspruchs 1 charakterisiert, insbesondere die vorrichtungsmäßige Umsetzung in einer Niederflurachse.

Erfindungsgemäß ist vorgesehen, eine Transversalflußmaschine, wie bereits aus der DE 195 22 382 bekannt, mit nicht rotationssymmetrisch ausgeführtem Stator in einem Einzelradantrieb, insbesondere einer Niederflurachse, einzusetzen. Bei dieser Ausführung einer Transversalflußmaschine wird die Erkenntnis ausgenutzt, daß diese aufgrund ihrer Eigenart, nämlich dem Fehlen eines magnetischen Drehfeldes, eine Abplattung der Maschine mit geringem Aufwand zur Beseitigung der damit verbundenen magnetischen Endeffekte ermöglicht. Diese Abplattung bzw. unsymmetrische Gestaltung kann im wesentlichen durch folgende Maßnahmen erzielt werden:
1. bei Anordnung von Statorweicheisenelementen mit im wesentlichen gleichen Abständen bzw. gleicher Teilung am Außenumfang des Rotors unter Berücksichtigung des Luftspaltes durch Fehlen von Statorweicheisenelementen bzw. Polschuhen am Außendurchmesser in Einbaulage der Transversalflußmaschine in den kritischen Bereichen und/oder
2. Ausschwenken von Statorweicheisenelementen bzw. Polschuhen des Außenstators aus ihrer zum Luftspalt zwischen Stator und Rotor orthogonalen Achse wenigstens in den in Einbaulage der Transversalflußmaschine hinsichtlich des zur Verfügung stehenden Bauraumes unter Berücksichtigung benachbarter Baueinheiten kritischen Bereichen.

Aufgrund dieser Maßnahmen entsteht ein Bereich mit einem vergrößerten Zwischenraum als durch die Teilung bedingt zwischen zwei einander benachbarten Statorweicheisenelementen, welcher als magnetische Lücke bezeichnet wird. Der Rotor trägt nach wie vor in bekannter Weise sämtliche Pole bzw. Polstrukturen, der Stator dementsprechend weniger, so daß der Zwischenraum zwischen zwei einander benachbarten Statorweicheisenelementen in Einbaulage in einem Direktantrieb in den Bereichen, in welchen eine Führung von Betätigungselementen für eine dem Antriebsrad zugeordnete Bremseinrichtung, insbesondere Scheibenbremseinrichtung sinnvoll und notwendig wäre, gegenüber den restlichen wesentlich vergrößert ist. Betätigungselemente, beispielsweise Bremsbetätigungsorgane begrenzen somit nicht mehr die maximale Größe einer Transversalfußmaschine und damit die maximal übertragbare Leistung. Dadurch wird erreicht, daß die Transversalflußmaschine im allgemeinen größer gebaut werden kann, da der Außendurchmesser des Rotors sich bis in den Grenzbereich des beim Einsatz einer konventionellen Transversalflußmaschine maximal zulässigen Bauraumes erstrecken kann. Die im allgemeinen übliche Ankerwicklung am Außenstator entfällt, was mit einer Verringerung der thermischen Belastung einhergeht. Der Vorteil besteht des weiteren darin, daß in dem beschriebenen Bereich der magnetischen Lücke keine Überlagerung von Anker- und Erregerfeld stattfindet, da die magnetischen Pfade hierfür aufgrund des Fehlens der Statorweicheisenelemente im Innen- und Außenstator nicht vorhanden sind. Es ist somit in einfacher Weise möglich, und zwar durch Messung des Rotorfeldes, z.B. mittels Hall-Sonden, die Pollageerfassung zu realisieren. Auf externe zusätzliche Elemente, wie Resolver und Inkrementalgeber, kann dabei verzichtet werden. Dies bietet einen enormen Vorteil bei der Verwendung von Hohlwellenmotoren, welche nach dem Transversalflußprinzip arbeiten.

Zusätzlich zum Fehlen von Statorweicheisenelementen können die der Lücke benachbarten Statorweicheisenelemente bzw. Polschuhe des Außenstators aus ihrer zum Luftspalt orthogonalen Achse von der Bodenlücke weg verschwenkt werden. Es kann somit ein günstiger Kompromiß zwischen der Größe der Lücke und dem störenden Einfluß dieser realisiert werden. Die verschwenkten Statorweicheisenelemente bzw. Polschuhe im Einlaufbereich der Lücke können bei alleinigem oder zusätzlichem Verschwenken mit geringerer Breite als der Rotor ausgeführt werden. Durch Anfassungen an den Flanken werden Wirbelstromverluste beim Eindringen des Rotorfeldes vermieden. Desweiteren sind erfindungsgemäß Mittel vorgesehen, welche die mit der Lücke einhergehenden magnetischen Endeffekte in einfacher Weise ausgleichen.

Zur Vermeidung des Skineffektes in den Leitern der Wicklungen wird die Ankerwicklung am Innenstator im Lückenbereich vorzugsweise gekröpft ausgeführt, um damit einen vergrößerten Abstand des Leiters vom Rotor zu erreichen.

Zur Führung des Rotorfeldes ist ein Flußleitstück im Bereich der Lücke vorgesehen. Dieses kann sich axial auf beiden Seiten der Ankerwicklung des Innenstators, im wesentlichen über einen Bereich, welcher dem des Erstreckungswinkels in Umfangsrichtung des Bereiches mit vergrößertem Zwischenraum am Außenstator entspricht, erstrecken. Das Flußleitstück kann dabei aus geblechtem Trafoeisen oder aber aus Pulververbundwerkstoff hergestellt sein. Es dient neben der Gewährleistung eines definierten Arbeitspunktes der Permanentmagneten auch der magnetischen Abschirmung gegenüber der konstruktiven Umgebung.

Desweiteren besteht die Möglichkeit, ein weiteres Flußleitstück in Form eines dünnwandigen Schirmes ebenfalls aus geblechtem Trafoeisen oder aus Pulververbundwerkstoff im Bereich der Lücke am Außendurchmesser des Rotors vorzusehen. Dies bietet den Vorteil, daß das Eindringen des Rotorstreufeldes in die Gehäuseteile weitgehendst vermieden werden kann. In Analogie gilt diese Aussage auch für das Vorsehen eines in axialer Richtung in Höhe der Lücke neben dem Rotor angeordneten axialen Flußleitstückes. Da üblicherweise der Rotor bzw. die Polkörperstrukturen in axialer Richtung zur Festigung von einem Endring begrenzt werden, ist das axiale Flußleitstück in möglichst geringem Abstand neben diesem anzuordnen.

Erfindungsgemäß wird eine derartig gestaltete Transversalflußmaschine als als Radmotor fungierender Elektromotor in eine Niederflurachse montiert. Dabei erfolgt der Einbau derart, daß die am Stator vorgesehenen Bereiche, welche sich durch Weglassen von mindestens einem Schnittbandkern oder dem Verkippen eines oder mehrerer Schnittbandkerne oder aber einer Kombination aus beiden Möglichkeiten auszeichnen, derart in Einbaulage angeordnet sind, daß der für die Betätigungsorgane der Bremseinrichtung, insbesondere die Zylinder-Kolbeneinheiten erforderliche Freiraum geschaffen wird. Der Einzelradantrieb zeichnet sich somit dadurch aus, daß im Bereich der mit den Rädern gekoppelten Niederflurachse eine Transversalflußmaschine mit im Bereich ihres Außenstators vorgesehenen Lücken angeordnet ist, wobei diese Lücken in Einbaulage der Transversalflußmaschine derart gegenüber dem anzutreibenden Rad bzw. der Radachse angeordnet sind, daß die Betätigungsorgane der an den Rädern wirksam werdenden Bremseinrichtungen, insbesondere der Scheibenbremsen nicht behindert werden. Insbesondere können die Betätigungsorgane der Bremseinrichtungen durch diese Lücken hindurchgeführt werden bzw. sich bis in den Bereich der Lücken erstrecken, ohne die Arbeitsweise der Transversalflußmaschine zu stören. Unter Lücken sind dabei Bereiche zu verstehen, welche einen größeren als durch die Teilung bedingten Zwischenraum zwischen zwei einander benachbarten Statorweicheisenelementen bilden.

Die erfindungsgemäße Lösung ermöglicht es, Transversalflußmaschinen mit entsprechender Größe zum Zwecke des Einzelradantriebes bei Fahrzeugen, beispielsweise Stadtbussen, insbesondere in Niederflurachsen, einzusetzen, ohne daß die baulichen Gegebenheiten, welche durch die Anordnung der Bremseinrichtungen vorgegeben sind, als Grenzen für die radiale Ausdehnung der Transversalflußmaschine angesehen werden müssen. Die Transversalflußmaschine kann dabei direkt zum Antrieb einer Radantriebswelle oder aber zum indirekten Antrieb über weitere Übertragungseinrichtungen in Form von Drehzahl-/Drehmomentenwandlern eingesetzt werden. Im letzgenannten Fall ist zwischen Transversalflußmaschine und Radantriebswelle wenigstens ein Getriebe zwischengeschalten.

Die erfindungsgemäße Lösung in Form eines Einzelradantriebes ist als einzelne Baugruppe, umfassend die Transversalflußmaschine, oder als komplette Baueinheit für zwei Räder in Form einer Niederfurachse, umfassend zwei über einen Achskörper miteinander verbundene Antriebseinheiten, die den entsprechenden Rädern zuordenbar sind, anbietbar.

Die Symmetrieachse der Transversalflußmaschine kann mit der Verlängerung der geometrischen Radachse, d.h. mit der Symmetrieachse der Radantriebswelle zusammenfallen oder aber gegenüber dieser versetzt angeordnet sein. Im ersten Fall kann der Außenstator dabei einen Durchmesser aufweisen, welcher bezogen auf die Radantriebswelle wenigstens dem Abstand zwischen Radantriebswelle und innerem Abmaß der Bremsbetätigungselemente entspricht. Ein Durchmesser größer diesem Abmaß ist ebenfalls möglich, allerdings ist zu berücksichtigen, daß der äußere Durchmesser des Rotors der Transversalflußmaschine immer geringer als dieses Abmaß zwischen Radantriebswelle und innerem Abmaß der Bremsbetätigungselemente in radialer Richtung ist. Im zweiten Fall kann der Durchmesser des Außenstators derart gewählt werden, daß dieser sich ebenfalls bis in den Bereich der Der Bremsbetätigungseinrichtungen erstreckt. Der Durchmesser entspricht dann wenigstens dem Abstand zwischen Symmetrieachse der Radantriebswelle und dem inneren Abmaß der Bremsbetätigungselemente plus oder minus dem Versatz der Transversalflußmaschine gegenüber der Radantriebswelle. Dabei können die Vorteile einer Transversalflußmaschine mit größeren Abmessungen gegenüber den anderen Elektromotoren optimal bei gleichem oder geringerem zur Verfügung stehenden Bauraum genutzt werden.

Die erfindungsgemäße Lösung der Aufgabe wird nachfolgend anhand von Figuren erläutert. Darin ist im übrigen folgendes dargestellt:
- Fig. 1a und 1b: verdeutlicht anhand einer konventionell ausgeführten Transveralflußmaschine die in einem Direktantrieb auftretenden Probleme;
- Fig. 2: zeigt eine erfindungsgemäß verwendete, modifizierte Transversalflußmaschine im Querschnitt mit gekröpfter Wicklung und verschwenkten Außenstatorweicheisenelementen;
- Fig. 3: verdeutlicht eine Ausführung eines der Lücke benachbarten Statorweicheisenelementes;
- Fig. 4: verdeutlicht einen Lückenbereich im Querschnitt mit zusätzlichem Flußleitstück und außenliegenden Schutzschirm;
- Fig. 5: verdeutlicht einen Lückenbereich im Querschnitt mit zusätzlichem axialen Flußleitstück;
- Fig. 6: verdeutlicht schematisch anhand einer Ansicht entsprechend Figur 1b die Anordnung einer erfindungsgemäß modifizierten Transversalflußmaschine zum Zwecke des Einzelradantriebes in einer Niederflurachse.

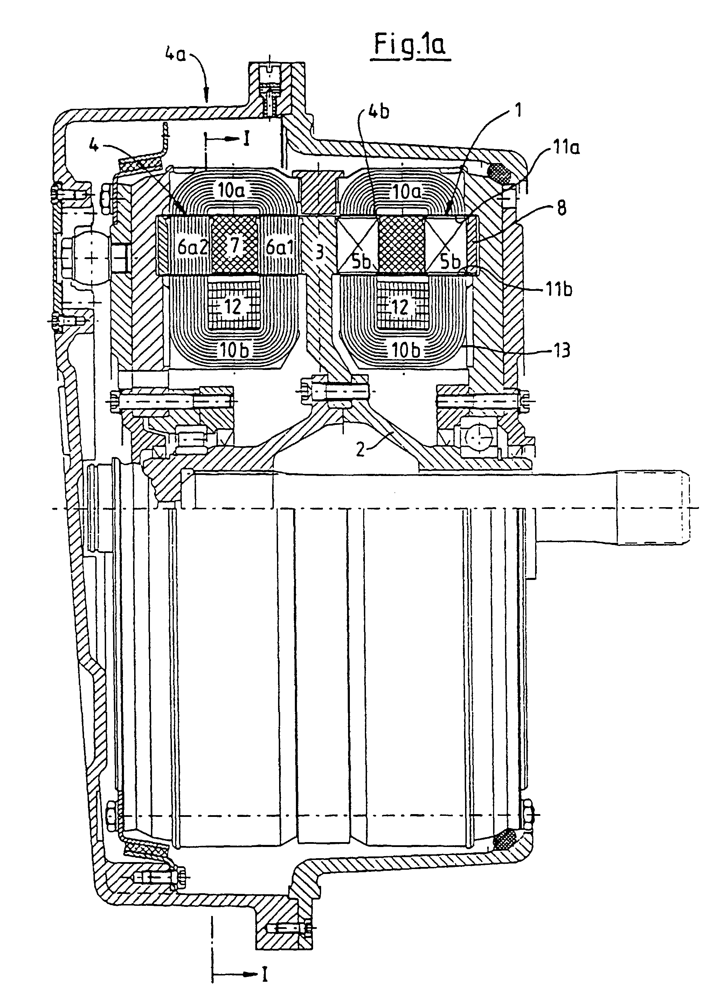

In der Fig. 1a ist nochmals der Grundaufbau einer konventionell ausgeführten Transversalflußmaschine erläutert und des weiteren die Problematik des Einsatzes in einem Direktantrieb.

In der Figur 1a ist nochmals zur Verdeutlichung der Problematik ein Längsschnitt durch eine konventionell ausgeführte Transversalflußmaschine 30 dargestellt, bei der in einem Gehäuse ein Rotor 1 mit einer Rotorwelle 2 und einem Abtriebsflansch drehbar gelagert ist. Die Rotorwelle weist im zentralen Teil einen Bund auf, an der eine kreisrunde zentrale Trägerscheibe 3 befestigt ist. Am radial äußeren Umfang dieser Trägerscheibe 3 erstrecken sich beidseitig in axialer Richtung ringförmige bzw. trommelförmige Polkörperstrukturen, hier 4a und 4b. Diese Polkörperstrukturen 4a und 4b umfassen jeweils in zwei Reihen angeordnet und wechselweise in Umfangsrichtung polarisierte Permanentmagnete 5, für die Polkörperstruktur 4a, 5a und die Polkörperstruktur 4b, 5b, sowie Weicheisenelemente. Die Weicheisenelemente sind hier für die Polkörperstruktur 4a mit 6a1 und 6a2 bezeichnet und für die Polkörperstruktur 4b ebenfalls mit 6b1 und 6b2, jedoch nicht dargestellt. In axialer Richtung ist die jeweilige Polkörperstruktur 4a und 4b wie folgt aufgebaut: Von der Trägerscheibe 3 aus erstreckt sich zunächst eine erste Reihe von Permanentmagneten 5 bzw. Weicheisenelementen 6, woran sich ein Zwischenring 7 anschließt, sowie eine zweite Reihe von Permanentmagneten 5 bzw. Weicheisenelemente 6, daran anschließend ein Endring 8.

Radial innerhalb und außerhalb der Polkörperstrukturen 4a und 4b sind ein Innen- und ein Außenstator 13a und 13b, umfassend eine Vielzahl von in Umfangsrichtung der Polkörperstrukturen angeordneten Statorweicheisenelementen 10 am Statorgehäuse vorgesehen. Die radial außerhalb liegenden Statorweicheisenelemente sind dabei mit 10a und die radial innerhalb liegenden Statorweicheisenelemente mit 10b bezeichnet. Die einzelnen Statorweicheisenelemente sind derart angeordnet, daß zu den Polkörperstrukturen 4a und 4b radiale Luftspalte 11 entstehen. Dabei sind wieder die radial innerhalb liegenden Luftspalte mit 11b und die radial außerhalb liegenden Luftspalte mit 11a bezeichnet. Die Statorweicheisenelemente 10b und 10a sind über den ganzen Umfang verteilt und von Wicklungen 12 durchsetzt. Sie bilden einen im Statorgehäuse fest angeordneten Stator 13 des Motors.

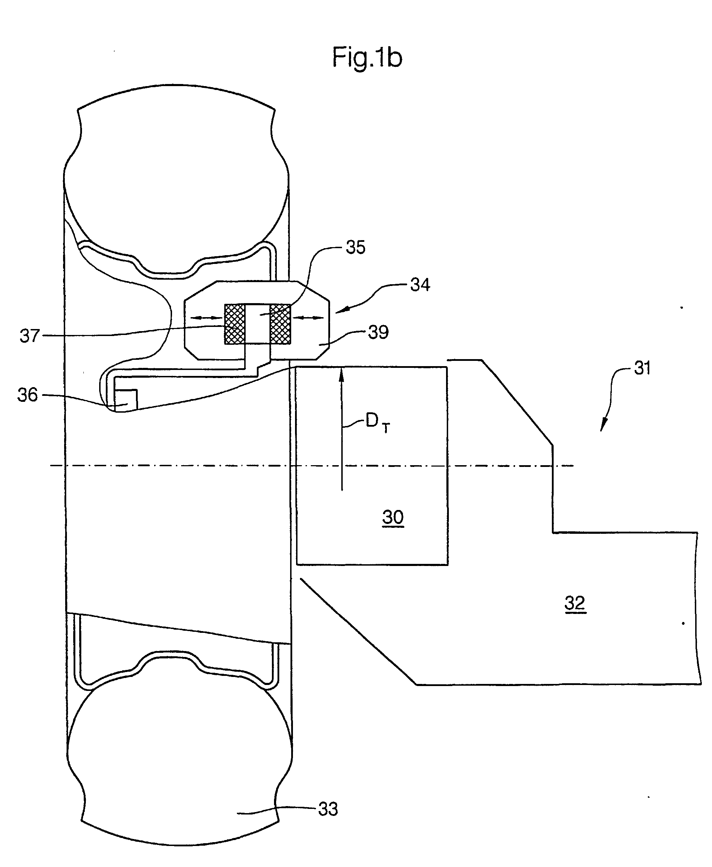

Die Figur 1b verdeutlicht schematisch in stark vereinfachter Darstellung die Problematik der Ausnutzbarkeit des zur Verfügung stehenden Bauraumes für eine Transversalflußmaschine 30 bei Integration in einen Einzelradantrieb, insbesondere eine Niederflurachse 31 für Fahrzeuge, beispielsweise Stadtbusse.

Die Baueinheit Niederflurachse 31, hier nur ein teilweise dargestellt, umfaßt . einen Achskörper 32, zwei Räder 33, wenigstens eine, wenigstens einem der beiden Räder 33 unmittelbar zum Antrieb zugeordnete Transversalflußmaschine 30 und jeweils einem Rad 33 zugeordnete Bremseinrichtungen in Form von Scheibenbremseinrichtungen 34. Die Scheibenbremseinrichtungen 34 sind in bekannter Weise, wie beispielsweise in Gerigk, Bruhn, Danner: "Kraftfahrzeugtechnik" beschrieben, aufgebaut. Der Offenbarungsgehalt dieses Druckwerkes bezüglich der Scheibenbremseinrichtungen wird in den Offenbarungsgehalt dieser Anmeldung mit einbezogen. Die Bremsscheibe 35 ist in mit einer Nabe 36 verschraubt. Der Bremsscheibe 35 sind Bremsbeläge 37 zugeordnet, welche mittels hier im einzelnen nicht dargestellten Bremsbetätigungselementen 38 gegen diese anpreßbar sind. Zu diesem Zweck ist ein mit der Radaufhängung verschraubter, hier stark vereinfacht dargestellter Bremssattel 39 vorgesehen, welcher die Betätigungselemente enthält. Diese sind in der Regel als hydraulisch oder pneumatisch betreibbare Zylinder-Kolbeneinheiten ausgeführt.

Aus dieser Figur wird ersichtlich, daß die Grenzen für den Einsatz in einem Direktantrieb durch den zur Verfügung stehenden Bauraum, insbesondere durch die Anordnung der Betätigungsorgane bzw. Elemente der Bremseinrichtungen bestimmt werden. Die Transversalflußmaschine 30 ist mit geringem Durchmesser D_{T} auszuführen, um mit den Betätigungsorganen- bzw. Elementen der an den Rädern wirksam werdenden Bremseinrichtungen nicht zu kollidieren.

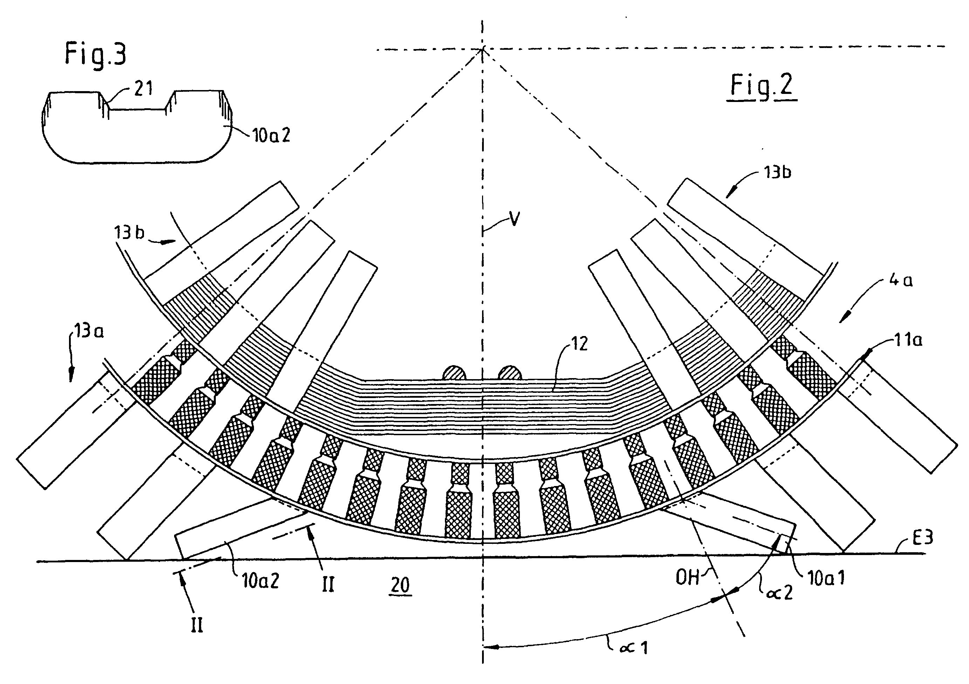

Die Fig. 2 bis 4 verdeutlichen Ausführungen einer Transversalflußmaschine in einem Teilschnitt durch diese in axialer Richtung mit sogenannter Lücke. Der Grundaufbau der Transversalflußmaschine entspricht dabei dem einer konventionellen, wie in Fig. 1 beschriebenen. Für gleiche Elemente werden deshalb die gleichen Bezugszeichen verwendet.

Der Teilschnitt ist in Einbaulage der Transversalflußmaschine dargestellt, wobei die Ebene E1 die Ebene verdeutlicht, in welcher die Antriebswelle angeordnet ist. Der Rotor trägt in bekannter Weise sämtliche Pole, die Polkörperstrukturen 4a und 4b, bezogen auf die Figur 1a, hier jedoch nur 4a dargestellt, bleiben somit in ihrem Aufbau unverändert. Erfindungsgemäß erfolgt eine Abplattung der Transversalflußmaschine. Diese abgeplatteten Bereiche werden dann für die Führung und Anordnung von Elementen genutzt, welche ansonsten den zur Verfügung stehenden Bauraum für die Transversalflußmaschine begrenzen. Zu diesem Zweck werden am Außenstator 13a in radialer Richtung außerhalb der Polkörperstruktur 4a angeordnete Statorweicheisenelemente weggelassen, d.h. die Anordnung von Statorweicheisenelementen erfolgt derart, daß am Außenstator 13a wenigstens ein Bereich 20 (Lücke) mit einem größeren als durch die Teilung bedingten Zwischenraum zwischen zwei einander benachbarten Statorweicheisenelementen, hier der Statorweicheisenelemente 10a1 und 10a2 entsteht.

Des weiteren ist der Außenstator 13a frei von Ankerwicklungen. Der Außenstator 13a erfährt somit im Bodenbereich eine hinsichtlich der magnetischen Eigenschaften wirksame Unterbrechung, die sich beidseitig gegenüber einer Vertikalen V in Einbaulage beispielsweise über einen Winkel α1 betrachtet erstreckt. In diesem Bereich findet dann keine Überlagerung von Anker- und Erregerfeld statt, da die magnetischen Pfade hierfür fehlen. Dies bietet den Vorteil, daß der im Vergleich beim Einsatz einer konventionellen Transversalflußmaschine zur Verfügung stehende Bauraum, welcher dem Abstand zwischen den beiden Ebenen E1 und E3 entspricht, fast vollständig für den Rotor ausgenutzt werden kann. Daraus resultiert eine in ihrer Baugröße größere Transversalflußmaschine, welche höhere Leistungen erzeugen kann.

Die Figur 2 verdeutlicht jedoch neben der Lücke eine Reihe weiterer vorteilhafter Ausgestaltungsmöglichkeiten. So ist es beispielsweise möglich, die der Bodenlücke benachbarten Statorweicheisenelemente 10a1 und 10a2, d.h. Polschuhe des Außenstators 13a aus ihrer zum Luftspalt 11a orthogonalen Achse OH um einen Winkel α2 zu Verschwenken. Im dargestellten Fall sind dies die Statorweicheisenelemente bzw. Polschuhe des Außenstators 10a1 und 10a2. Dies bietet den Vorteil einer verringerten Lücke bei gleichbleibender Bauraumfreigabe.

In diesem Zusammenhang besteht jedoch auch die Möglichkeit, die Polschuhe 10a1 und 10a2 mit geringerer Eisenbreite als der des Rotors auszuführen. Durch entsprechende Anfassungen an den Flanken, werden Wirbelstromverluste beim Eindringen des Rotorfeldes vermieden. Eine Möglichkeit einer derartigen Gestaltung eines Polschuhes ist nicht maßstäblich in der Figur 3 als Ansicht II-II aus Figur 2 dargestellt. Das Statorweicheisenelement 10a2 weist angeschrägt ausgeführte Kanten 21 aus.

Um den Skineffekt in den Leitern aufgrund des Rotorfeldes zu vermeiden, kann die Ankerwicklung im Lückenbereich am Innenstator 13b gekröpft ausgeführt werden. Damit wird ein vergrößerter Abstand der Leiter, d.h. der einzelnen Bestandteile der Ankerwicklung, vom Rotor 1 erzielt und die Beeinflussung der Ankerwicklung durch den Rotor 1 verringert.

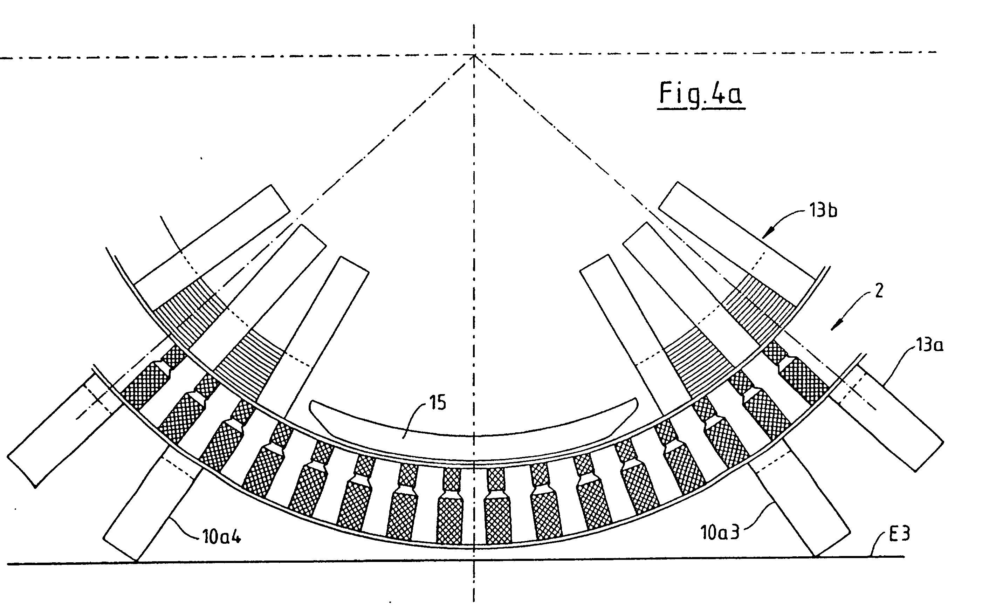

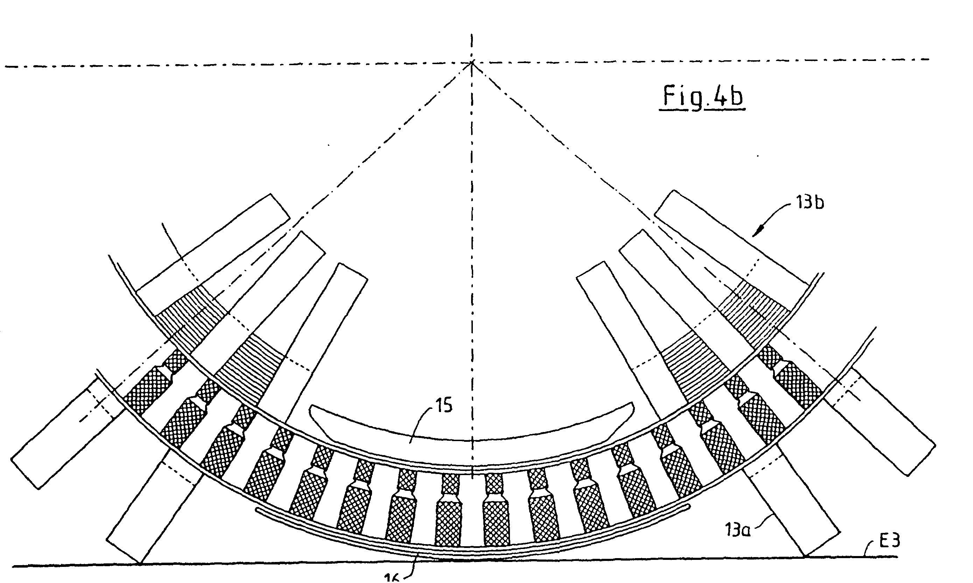

Die Figur 4a verdeutlicht eine Möglichkeit der Leitung des Rotorfeldes, indem im Bereich der Lücke am Innenstator 13b ein Flußleitstück 15, welches beispielsweise aus geblechtem Trafoeisen oder aus einem Pulververbundwerkstoff hergestellt sein kann, zur Führung des Rotorfeldes angeordnet ist. Das Flußleitstück 15 ist dabei im wesentlichen im Bereich des Außenumfanges des Innenstators 13b angeordnet. Die Wicklungen werden normal geführt. Auf die Darstellung der Wicklungen, die gekröpft ausgeführt sein können, am Innenstator 13b im Erstreckungsbereich der Lücke 20 wurde aus Gründen einer übersichtlichen Darstellung verzichtet. Zusätzlich kann, wie in Figur 4b dargestellt, zur Verhinderung des Eindringens des Rotorstreufeldes in die Gehäuseteile im Bereich des Innendurchmessers des Außenstators 13a im Bereich der Lücke ein dünnwandiger Schirm 16 aus ähnlichen Materialien eingesetzt werden.

Die in den Figuren 3 und 4 dargestellten Möglichkeiten sind auch für die in der Figur 2 dargestellten Varianten einsetzbar.

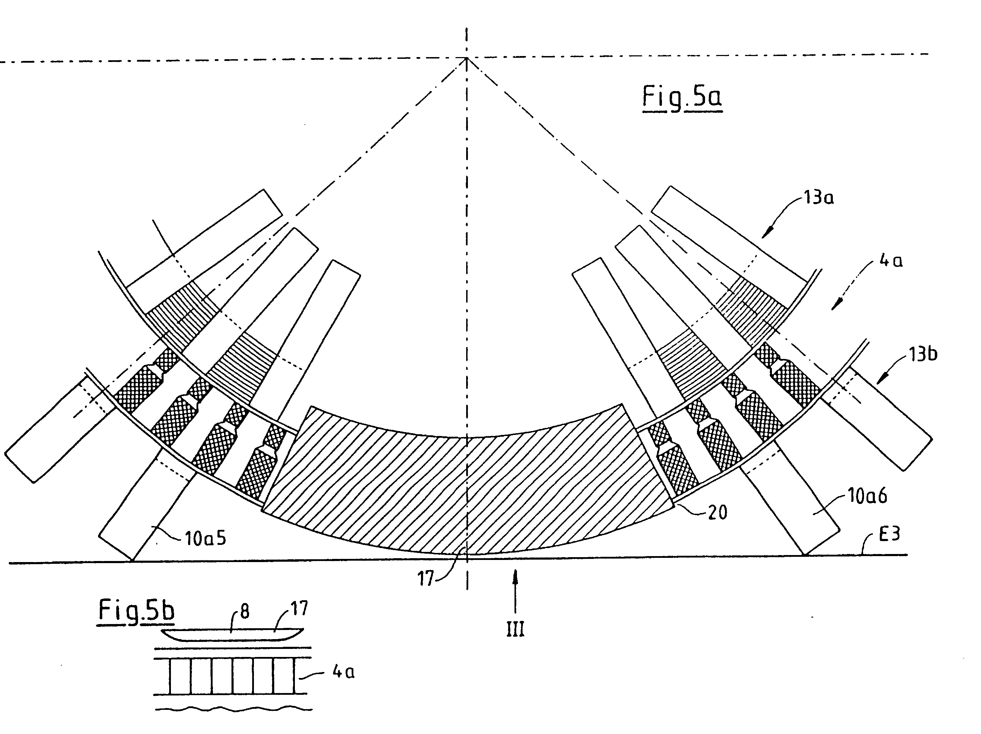

In den Figuren 5a und 5b ist die Verwendung eines axialen Flußleitstückes 17 schematisch verdeutlicht. Der Grundaufbau von Rotor 1 und Stator 13 entpricht dem in den Figuren 1, 2 und 4, weshalb für gleiche Elemente die gleichen Bezugszeichen verwendet werden. In axialer Richtung neben dem Rotor 1 ist ein Flußleitstück 17 radial in Höhe der Lücke bzw. des vergrößerten Zwischenraumes 20 zwischen zwei einander benachbarten Statorweicheisenelementen, hier der Statorweicheisenelemente 10a5 und 10a6, angeordnet.

Die Figur 4b verdeutlicht in einer Ansicht III entsprechend Figur 5a eine Draufsicht auf eine Polstruktur 4 eines Rotors 1 einer Transversalflußmaschine. daraus wird ersichtlich, daß das axiale Flußleitstück zur Gewährleistung der diesem zugedachten Funktion nur in einem sehr geringen Abstand neben einem, der Polstruktur 4 zugeordneten Endring 8, angeordnet sein darf.

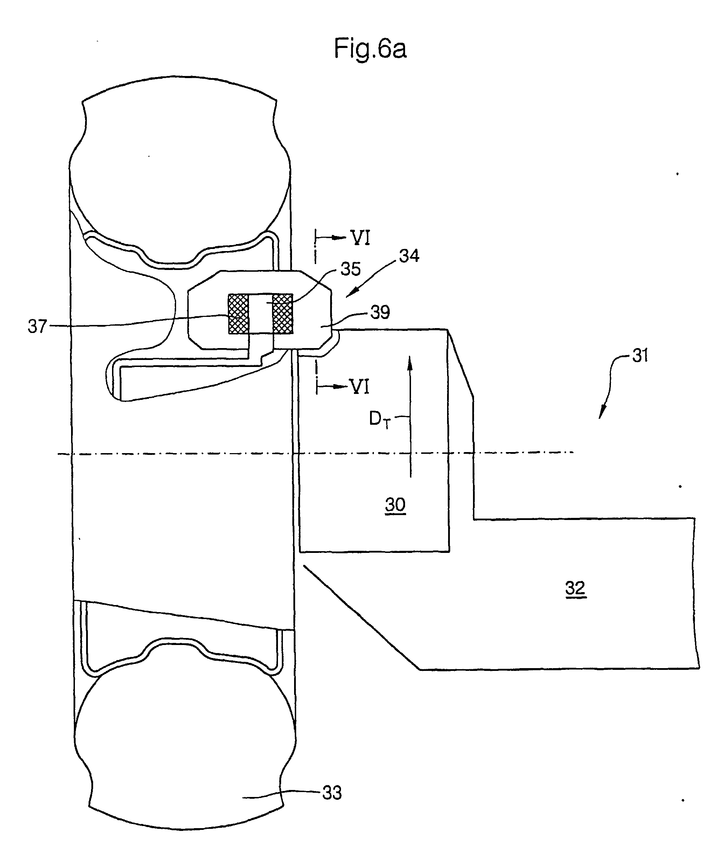

Die Fig. 6a zeigt einen Einzelradantrieb in Kombination mit einer Niederflurachse 31, wie in der Figur 1b dargestellt, wobei dem anzutreibenden Rad 33 ein als Transversalflußmaschine 30 ausgeführter Elektromotor zugeordnet ist. Des Weiteren sind die Betätigungseinrichtungen für die an den Rädern wirksam werdenden Bremseinrichtungen, welche als Scheibenbremseinrichtungen 34 ausgeführt sind, ersichtlich. Auch in dieser Figur ist lediglich ein Ausschnitt aus einer Niederflurachse, im Einzelnen der Antrieb nur eines Rades, des Rades 33, dargestellt. Des weiteren sind in der Figur die Bremsscheibe 35 und die äußeren Abmaße des Bremssattels 39 in dieser Ansicht dargestellt. Die Lückenbereiche am Außenstator der Transversalflußmaschine 30 sind dabei in Einbaulage in einem Bereich vorgesehen, welcher bei einer konventionellen Gestaltung des Einzelraddirektantriebes mit einer Transversalflußmaschine ohne Lückenbereiche den zur Verfügung stehenden Bauraum für die Transveralflußmaschine begrenzen würde, d.h. einen Bereich, in dem die Betätigungsorgane bzw. die dies tragenden Elemente 39 der an den Rädern 33 wirksam werdenden Bremseinrichtungen 34 geführt werden.

Aus der Figur 6a ist ersichtlich, daß die Abmessungen in radialer Richtung, insbesondere der Durchmesser der Transversalflußmaschine 30 größer ist, als in Figur 1b.

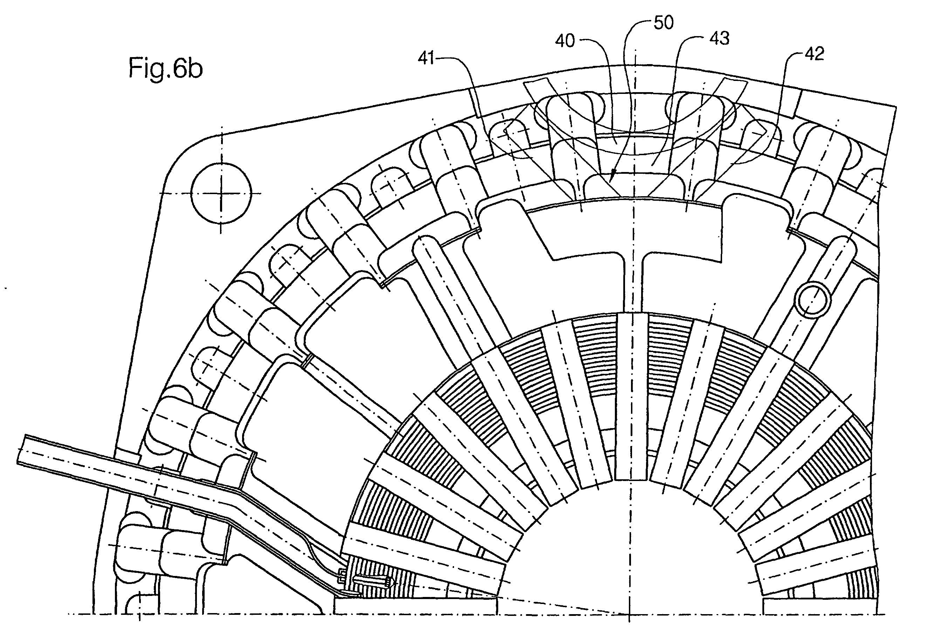

Die Figur 6b verdeutlicht in einem Ausschnitt aus einer Ansicht VI-IV aus der Figur 6a anhand der äußeren Abmessungen der Betätigungselemente bzw. Anpreßelemente, hier mit 40 bezeichnet, deren Anordnung im Bereich einer Lücke 43, welche durch Verschwenken zweier einander benachbarter Statorweicheisenelemente 41 und 42 des Außenstators 44 aus deren orthogonalen Lage heraus gebildet wird.

## Patentansprüche

1. Einzelradantrieb für den Einsatz in Fahrzeugen
1.1 mit wenigstens einer, mit wenigstens einem Rad (33) wenigstens mittelbar koppelbaren Transversalflußmaschine (30), umfassend einen Rotor und einen Außenstator (13a) mit einer Vielzahl von Statorweicheisenelementen (10a);
1.2 mit einer einem Rad (33) zugeordneten Bremseinrichtung (34);
1.3 die Transversalflußmaschine (30) weist die folgenden Merkmale auf:
1.3.1 der Außenstator (13a) der Transversalflußmaschine (30) ist frei von Ankerwicklungen;
1.3.2 die äußeren Statorweicheisenelemente (10a) sind derart angeordnet, daß am Außenstator (13a) wenigstens eine Lücke (20) in Form eines Bereiches mit einem größeren als durch die Teilung bedingten Zwischenraum zwischen zwei einander benachbarten Statorweicheisenelementen (10a) vorgesehen ist;
gekennzeichnet durch die folgenden Merkmale:
1.4 die Transversalflußmaschine (30) ist in Einbaulage gegenüber dem Rad (33) und den Bremseinrichtungen (34) derart angeordnet, daß die Bremsbetätigungseinrichtungen (38, 39) wenigstens im ausgerücktem Zustand sich wenigstens bis in die Lücke (20) am Außenstator (13a) der Transversalflußmaschine (30) erstrecken oder durch diese hindurchführbar sind.

2. Einzelradantrieb nach Anspruch 1, gekennzeichnet durch die folgenden Merkmale:
2.1 die Bremseinrichtung (34) ist als Scheibenbremseinrichtung ausgeführt;
2.2 die Scheibenbremseinrichtung umfaßt wenigstens eine Bremsscheibe (35), an die Bremsscheibe (35) anpreßbare Bremsbeläge (37) und einen, dieser zugeordneten Bremssattel (39), welcher die Anpreßelemente zur Anpressung der Bremsbeläge (37) beinhaltet;
2.3 der Bremssattel (39) erstreckt sich in Einbaulage wenigstens zum Teil in die Lücke (20).

3. Einzelradantrieb nach einem der Ansprüche 1 oder 2, dadurch gekennzeichnet, daß die Transversalflußmaschine (30) achsversetzt zur Symmetrieachse der Radantriebswelle angeordnet ist.

4. Einzelradantrieb nach einem der Ansprüche 1 bis 3, dadurch gekennzeichnet, daß zwischen Rad (33) und Transversalflußmaschine (30) ein Getriebe angeordnet ist.

5. Einzelradantrieb nach Anspruch 4, dadurch gekennzeichnet, daß das Getriebe als Schaltgetriebe ausgeführt ist.

6. Einzelradantrieb nach einem der Ansprüche 1 bis 5, dadurch gekennzeichnet, daß jedem Rad (33) auf einer gemeinsamen geometrischen Achse, welche durch die Drehachsen der beiden Räder bestimmt ist, eine Transversalflußmaschine (30) zugeordnet ist.

7. Einzelradantrieb nach einem der Ansprüche 1 bis 5,
gekennzeichnetdurch folgende Merkmale:
7.1 den auf einer gemeinsamen, durch die Drehachsen verlaufenden geometrischen Achse angeordneten Rädern (32) ist eine Transversalflußmaschine (30) zugeordnet;
7.2 der Transversalflußmaschine (30) ist mit einem jeweils mit den Radantriebswellen gekoppelten Verteilergetriebe verbunden.

8. Einzelradantrieb nach einem der Ansprüche 1 bis 7, gekennzeichnet durch folgende Merkmale:
8.1 jedem auf einer gemeinsamen durch die Drehachsen bestimmten geometrischen Achse angeordneten Rad ist ein radseitig drehbar gelagerter Radträger zugeordnet;
8.2 es ist ein Achskörper vorgesehen, welcher die Radträger starr miteinander verbindet.

## Claims

1. Single wheel drive for use in vehicles
1.1 with at least one transverse flux machine (30) which can be coupled, at least indirectly, to at least one wheel (33) and comprises a rotor and an external stator (13a) with a plurality of soft iron stator elements (10a);
1.2 with a brake device (34) associated with a wheel (33);
1.3 the transverse flux machine (30) comprises the following features:
1.3.1 the external stator (13a) of the transverse flux machine (30) is free of armature windings;
1.3.2 the external soft iron stator elements (10a) are arranged in such a way that at least one gap (20) is provided on the external stator (13a) in the form of a region with a space, larger than that caused by the division, between two mutually adjacent soft iron stator elements (10a);
characterised by the following features:
1.4 the transverse flux machine (30) is arranged in the fitted position with respect to the wheel (33) and the brake devices (34) in such a way that the brake actuating devices (38, 39), at least in the disengaged position, extend at least up to the gap (20) on the external stator (13a) of the transverse flux machine (30) or can be guided through it.

2. Single wheel drive according to claim 1, characterised by the following features:
2.1 the brake device (34) is designed as a disc brake device;
2.2 the disc brake device comprises at least one brake disc (35), brake linings (37) which can be pressed onto the brake disc (35) and a brake calliper (39) associated therewith, which contains the pressing elements for pressing the brake linings (37);
2.3 the brake calliper (39) extends at least partially into the gap (20) in the fitted position.

3. Single wheel drive according to one of claims 1 or 2, characterised in that the transverse flux machine (30) is arranged axially offset from the axis of symmetry of the wheel drive shaft.

4. Single wheel drive according to one of claims 1 to 3, characterised in that a gearbox is arranged between the wheel (33) and the transverse flux machine (30).

5. Single wheel drive according to claim 1, characterised in that the gearbox is designed as a gear shift system.

6. Single wheel drive according to one of claims 1 to 5, characterised in that a transverse flux machine (30) is associated with each wheel (33) on a common geometric axis determined by the axes of rotation of the two wheels.

7. Single wheel drive according to one of claims 1 to 5, characterised by the following features:
7.1 a transverse flux machine (30) is associated with the wheels (32) arranged on a common geometric axis extending through the axes of rotation;
7.2 the transverse flux machine (30) is connected to a power divider coupled, in each case, to the wheel drive shafts.

8. Single wheel drive according to one of claims 1 to 7, characterised by the following features:
8.1 a wheel support rotatably mounted on the wheel side is associated with each wheel arranged on a common geometric axis determined by the axes of rotation;
8.2 an axle body is provided which rigidly connects the wheel supports to one another.

## Revendications

1. Entraînement à une roue pour une utilisation dans des véhicules,
**1.1** avec au moins une machine à flux transversal **(30)** pouvant être couplée de manière médiate à au moins une roue **(33),** comprenant un rotor et un stator extérieur **(13a)** avec une pluralité d'éléments de stator en fer doux **(10a) ;**
**1.2** avec un dispositif de freinage **(34)** associé à une roue **(33) ;**
**1.3** la machine à flux transversal **(30)** présente les caractéristiques suivantes :
**1.3.1** le stator extérieur **(13a)** de la machine à flux transversal **(30)** est dépourvu d'enroulement d'induit ;
**1.3.2** les éléments de stator en fer doux **(10a)** sont agencés de telle manière que, sur le stator extérieur **(13a),** il est prévu au moins une lacune **(20)** sous la forme d'une zone présentant un interstice supérieur à celui dû à la séparation entre deux éléments de stator en fer doux **(10a)** voisins ;
caractérisé par les caractéristiques suivantes :
**1.4** à l'état monté, la machine à flux transversal **(30)** est disposé de telle manière par rapport à la roue **(33)** et aux dispositifs de freinage **(34)** que les dispositifs de commande de freinage **(38, 39)** s'étendent, au moins à l'état déployé, au moins jusque dans la lacune **(20)** sur le stator extérieur **(13a)** de la machine à flux transversal **(30)** ou peuvent être passés à travers elle.

2. Entraînement à une roue selon la revendication **1**, caractérisé par les caractéristiques suivantes :
**2.1** le dispositif de freinage **(34)** est conformé en dispositif de freinage à disque ;
**2.2** le dispositif de freinage à disque comprend au moins un disque de freinage **(35),** des garnitures de freinage **(37)** pouvant être pressées contre le disque de freinage **(35)** et un étrier de freinage **(39)** associé à celles-ci, qui comprend les éléments de pressage pour presser les garnitures de freinage **(37) ;**
**2.3** l'étrier de freinage **(39)** s'étend à l'état monté au moins en partie dans la lacune **(20).**

3. Entraînement à une roue selon la revendication **1** ou **2,** caractérisé en ce que la machine à flux transversal **(30)** est placée avec un décalage d'axe par rapport à l'axe de symétrie de l'arbre d'entraînement de la roue.

4. Entraînement à une roue selon l'une des revendications **1** à **3**, caractérisé en ce qu'un engrenage est placé entre la roue **(33)** et la machine à flux transversal **(30).**

5. Entraînement à une roue selon la revendication **4**, caractérisé en ce que l'engrenage est conformé en boîte de vitesse.

6. Entraînement à une roue selon l'une des revendications **1** à **5**, caractérisé en ce qu'à chaque roue **(33)** est associée, sur un axe géométrique commun déterminé par les axes de rotation des deux roues, une machine à flux transversal **(30).**

7. Entraînement à une roue selon l'une des revendications **1** à **5**, caractérisé par les caractéristiques suivantes :
**7.1** aux roues **(32)** placées sur un axe géométrique commun passant par les axes de rotation, est associée une machine à flux transversal **(30) ;**
**7.2** la machine à flux transversal **(30)** est reliée à un engrenage distributeur couplé aux arbres d'entraînement des roues.

8. Entraînement à une roue selon l'une des revendications **1** à **7**, caractérisé par les caractéristiques suivantes :
**8.1** à chaque roue placée sur un axe géométrique commun déterminé par les axes de rotation est associé un support de roue monté rotatif côté roue ;
**8.2** il est prévu un corps d'axe qui relie les supports de roue de manière fixe.
